# EUROPÄISCHE PATENTSCHRIFT

(11) **EP 3 578 274 B1**
(45) Veröffentlichungstag und Bekanntmachung des Hinweises auf die Patenterteilung: **21.10.2020**
(21) Anmeldenummer: 19176357.2
(22) Anmeldetag: 24.05.2019
(51) Int. Cl.: B08B 15/02, B01L 1/02, F24F 3/16, B25H 1/20, G05D 7/06

(54) **SICHERHEITSWERKBANK MIT GEREGELTEM UMLUFTSTROM SOWIE VERFAHREN ZU DEREN BETRIEB**
SAFETY WORKBENCH WITH REGULATED CIRCULATION FLOW AND METHOD OF OPERATING THE SAME
POSTE DE SÉCURITÉ BIOLOGIQUE À FLUX D'AIR DE CIRCULATION RÉGULÉ AINSI QUE SON PROCÉDÉ DE FONCTIONNEMENT

(30) Priorität: 08.06.2018 DE 102018004587
(43) Veröffentlichungstag der Anmeldung: 11.12.2019
(73) Patentinhaber: Thermo Electron LED GmbH, 63505 Langenselbold (DE)
(72) Erfinder: FANTA, Patrick, 63505 Langenselbold (DE); NOLL, Christoph, 63505 Langenselbold (DE); ROSS, Gerd, 63505 Langenselbold (DE); RUPP, Oliver, 63505 Langenselbold (DE); SCHUCK, Gerhard, 63505 Langenselbold (DE)
(74) Vertreter: Tomerius, Isabel

(56) Entgegenhaltungen:
- EP-A2- 1 609 541
- US-A1- 2007 184 769

## Beschreibung

Die Erfindung betrifft eine Sicherheitswerkbank gemäß dem Oberbegriff des Anspruchs 1 sowie ein Verfahren nach Anspruch 8 zu deren Betrieb. Derartige Sicherheitswerkbänke und insbesondere solche zur Bearbeitung mikrobiologischer Proben, wie sie beispielsweise in der DE 44 41 784 C2 beschrieben sind, schützen vor Kontamination durch Bioaerosole, die bei mikrobiologischen Arbeiten auftreten und freigesetzt werden.

Innerhalb der Sicherheitswerkbänke werden die kontaminierten Luftströme mit Hilfe von Gebläsen als gerichtete Luftströme fortgeführt und über Filter geleitet, welche die Verunreinigungen aus dem Luftstrom zurückhalten. Wenigstens ein Teil der gefilterten Luft wird derart gereinigt als Abluftvolumenstrom, im Folgenden kurz als Abluftstrom bezeichnet, der Außenluft wieder zugeführt.

Sicherheitswerkbänke unterscheiden sich in ihren Sicherheitsvorkehrungen und werden entsprechend den unterschiedlichen internationalen Normen gebaut, geprüft und zugelassen. Unter anderem bieten Sicherheitswerkbänke Personenschutz oder Personen- und Produktschutz.

Bei Sicherheitswerkbänken, die nur Personenschutz bieten, spricht man von Sicherheitswerkbänken der Klasse I, wobei der Personenschutz durch das Ansaugen von Außenluft durch die Arbeitsöffnung in den Arbeitsraum der Sicherheitswerkbank erreicht wird. Solange dieser Lufteintrittsstrom nicht behindert und ausreichend Luft angesaugt wird, können Partikel und Aerosole nicht aus dem Innenraum der Sicherheitswerkbank nach außen gelangen. Die angesaugte Außenluft bildet also einen durch die Arbeitsöffnung strömenden Luftvorhang, der die an der Sicherheitswerkbank arbeitende Person bzw. die Umwelt vor Kontamination durch die Partikel schützt.

Ein ausreichender Personenschutz ist Voraussetzung für den Betrieb von Sicherheitswerkbänken. Diese auch als Rückhaltevermögen bezeichnete Eigenschaft einer Sicherheitswerkbank wird zum Beispiel durch eine genau festgelegte Lufteintrittsgeschwindigkeit in die Arbeitsöffnung definiert. Sie ist direkt proportional zum Abluftstrom, so dass Veränderungen des Abluftstroms einen direkten Einfluss auf den Personenschutz und auf die Sicherheit des Anwenders haben.

Sicherheitswerkbänke der Klasse II bieten zusätzlich zum Personenschutz auch den Arbeitsgegenständen in der Werkbank Schutz vor Kontaminationen von außen oder vor Kontamination durch andere in der Werkbank befindliche Proben (so genannte Kreuzkontamination). Der Schutz vor dieser Art von Verunreinigungen wird als Produktschutz bezeichnet. Der Produktschutz ergibt sich daraus, dass ein Teil des in der Werkbank angesaugten Luftstroms nach dem Filtern wieder dem Innenraum als Umluftstrom zugeführt wird. Üblicherweise wird dieser Umluftstrom in einer vertikalen Fallströmung von oben nach unten in den Arbeitsraum der Werkbank gerichtet. Dieser auch als Verdrängungsströmung oder "Downflow" bezeichnete Umluftstrom umspült die auf der Arbeitsplatte befindlichen Gegenstände und verhindert, dass verunreinigte Luft von außen oder von anderen Proben in Kontakt mit diesen Gegenständen kommen kann. Der Umluftstrom trifft wiederum im Bereich der Ansaugöffnung, die sich meist an der Vorderkante der Arbeitsplatte befinden, auf den in den Innenraum strömenden Lufteintrittsstrom, so dass keine Partikel nach außen dringen können. Der Produktschutz, einschließlich des Schutzes vor Kreuzkontamination, wird also maßgeblich durch das Verhältnis zwischen Downflow und Lufteintrittsgeschwindigkeit des Lufteintrittsstroms erzielt.

Um diese Luftströme zu erzeugen, weist eine normale Sicherheitswerkbank der Klasse II ein Wechselstromgebläse auf, welches einen Gesamtluftstrom aus dem Arbeitsinnenraum ansaugt und in einen Umluftfilter und einen Abluftfilter bläst. Bei diesen Filtern handelt es sich um Hochleistungs-Schwebstofffilter, zum Beispiel HOSCH-, HEPA- oder ULPA-Filter, welche in der Lage sind, die betreffenden Partikel oder Mikroorganismen aus dem Luftstrom herauszufiltern.

Bei der Inbetriebnahme einer solchen Sicherheitswerkbank wird der aus dem Gerät auszublasende Abluftstrom, also die auszublasende Luftmenge pro Zeiteinheit, über Luftklappen oder über den Strömungswiderstand der im Gerät eingebauten Filter mit Hilfe eines kalibrierten Anemometers auf einen nominalen Sollwert fest eingestellt. Üblicherweise werden etwa 65 bis 70 % des aus dem Arbeitsinnenraum angesaugten Gesamtluftstroms als Umluftstrom wieder in den Arbeitsinnenraum geführt und die verbleibenden 30 % bis 35 % als Abluftstrom an die Raumluft bzw. aus dem Raum herausführende Abluftsysteme abgegeben.

Aufgrund der systembedingten Kopplung von Umluft- und Abluftstrom ist es bei diesen Sicherheitswerkbänken nicht ohne weiteres möglich, den Produktschutz unabhängig vom Personenschutz einzustellen. Man hat daher in der Vergangenheit bereits Sicherheitswerkbänke mit separaten Gebläsen für Um- und Abluft entwickelt, die eine solche getrennte Einstellung ermöglichen.

Bei diesem zweiten Typ einer Sicherheitswerkbank wird bei der Inbetriebnahme zunächst der Personenschutz und dann der Produktschutz justiert. Dazu wird die Förderleistung des Abluftgebläses ebenfalls über Luftklappen, Filterwiderstände oder eine entsprechende elektrische Einstellung der Förderleistung des Abluftgebläses fest eingestellt. Aus der Einstellung des Abluftgebläses ergibt sich die Lufteinströmgeschwindigkeit des Lufteintrittsstroms im Bereich der Arbeitsöffnung, also der Personenschutz. Nach Einstellung des Abluftgebläses erfolgt die Einstellung der Strömungsgeschwindigkeit des nach unten gerichteten Umluftstroms, um nunmehr den Produktschutz zu justieren. Dieser Umluftstrom hat allerdings wiederum Einfluss auf die Lufteintrittsgeschwindigkeit des Lufteintrittsstroms, weshalb die Lufteintrittsgeschwindigkeit neu überprüft und oft nochmals justiert werden muss. Gegebenenfalls muss danach wiederum eine Nachjustierung von Um- und Abluftgebläse erfolgen.

Diese wechselweise und iterative Einstellung des Abluft- und des Umluftgebläses ist aufwändig und abhängig von den aktuellen Strömungsverhältnissen in der Sicherheitswerkbank bzw. im externen Abluftsystem, in das die Sicherheitswerkbank eingebunden ist. Daher ändert sich auch bei den bekannten Sicherheitswerkbänken mit zunehmender Beladung der Filter oder bei Strömungswiderstandsänderungen durch zum Beispiel Störungen im externen Abluftsystem die Lufteintrittsgeschwindigkeit. Mit zunehmender Belegung des Abluftfilters verringert sich das Abluftvolumen. Damit nimmt auch die eingesaugte Außenluft und entsprechend der Personenschutz der Geräte ab.

In der EP 1 609 541 A2 der Anmelderin, auf die hier hinsichtlich des grundsätzlichen Aufbaus der erfindungsgemäßen Sicherheitswerkbank ausdrücklich Bezug genommen wird, ist zur Lösung dieses Problems vorgeschlagen worden, Abluftgebläse und Umluftgebläse unabhängig voneinander so zu regeln, dass jeweils ein vorgegebener Volumenstrom-Sollwert eingehalten wird. Zur Bestimmung der aktuellen Förderleistung des jeweiligen Gebläses sind jeweils hinter dem Gebläse Strömungssensoren angeordnet, bei denen es sich um Druckdosen oder Anemometer handeln kann. Die von den Strömungssensoren ermittelten Strömungswerte werden mit dem für das jeweilige Gebläse hinterlegten Volumenstrom-Sollwert verglichen. Wird eine Abweichung festgestellt, wird die Gebläseleistung so geregelt, dass der Volumenstrom-Sollwert wieder erreicht wird.

Die durchgeführten Messungen basieren in der Praxis auf einer Differenzdruckmessung zwischen der Saug- und Druckseite der jeweiligen Gebläse. Wie Untersuchungen der Anmelderin ergeben haben, funktionieren diese Messungen auch recht zuverlässig, solange die Sicherheitswerkbank, insbesondere die Gebläse und Filter, unter den vorgegebenen, normalen Betriebsbedingungen arbeiten. Es hat sich jedoch auch gezeigt, dass es zu fehlerhaften Bestimmungen der Volumenströme kommen kann, wenn sich die Druckverhältnisse innerhalb der Sicherheitswerkbank ändern. Insbesondere müssen anwachsende Differenzen der statischen Drücke nicht notwendigerweise auf ein zu geringes Fördervolumen des Gebläses hinweisen. Geht die erhöhte Druckdifferenz jedoch auf eine andere Ursache zurück, führt der Regelmechanismus zu einer überhöhten Förderleistung, was bereits wegen des damit verbundenen höheren Energieverbrauchs und erhöhten Verschleißes der Gebläse nicht erwünscht ist. Außerdem können sich die vorgegebenen Volumenströme der Gebläse zueinander verschieben, was zu einem verringerten Personen- und/oder Produktschutz führen kann. Die Alarmgrenzen, jenseits derer die Sicherheitswerkbank nicht mehr betrieben werden soll, müssen daher relativ eng gezogen werden, um einen sicheren Schutz zu gewährleisten, was jedoch zu einer verkürzten sicheren Betriebsdauer führt und Filter eventuell häufiger als tatsächlich nötig getauscht werden müssen.

Die beschriebenen Fehler machen sich insbesondere im Falle des Umluftgebläses bemerkbar. Dies liegt hauptsächlich an den unterschiedlichen Gebläsetypen, die für Umluftgebläse einerseits und Abluftgebläse andererseits eingesetzt werden. In letzterem Fall können Gebläse mit vorwärts gekrümmten Laufrädern und Spiralgehäusen eingesetzt werden. Für diese Gebläse existieren Leistungskennlinien, die einen eindeutigen Zusammenhang zwischen einem bestimmten Stromverbrauch bzw. einer bestimmten Drehzahl des Gebläses und dem bei diesen Parametern geförderten Volumenstrom und statischen Druck ergeben. Für solche Gebläse kann also bereits aus dem Stromverbrauch mit hinreichender Sicherheit auf den aktuell geförderten Volumenstrom geschlossen werden. Diese Werte können entweder die Messung der Druckdifferenz für das Abluftgebläse ganz ersetzen oder zur Überprüfung und Korrektur der Druckdifferenz-Messwerte herangezogen werden. Für Umluftgebläse, die üblicherweise rückwärts gekrümmte Laufräder und eine andere Gehäuseform besitzen, gibt es dagegen keinen eindeutigen Zusammenhang zwischen Stromverbrauch bzw. Lüfterdrehzahl und Volumenstrom. Für eine Regelung des Umluftgebläses auf einen bestimmten Volumenstrom-Sollwert ist also eine hinreichend genaue Bestimmung des tatsächlich geförderten Volumenstromes erforderlich.

Von diesem Hintergrund ausgehend ist es die **Aufgabe** der Erfindung, eine Sicherheitswerkbank und ein Verfahren zu deren Betrieb anzugeben, welche eine exaktere Messung des vom Umluftgebläse geförderten Volumenstroms und somit eine genauere Regelung des Umluftgebläses und einen sichereren Betrieb der Sicherheitswerkbank ermöglicht.

Die Lösung dieser Aufgabe gelingt mit der Sicherheitswerkbank gemäß Anspruch 1 sowie dem Verfahren zum Betrieb der Sicherheitswerkbank gemäß Anspruch 8. Weitere Ausführungsformen und Verfahrensvarianten sind den jeweiligen Unteransprüchen zu entnehmen.

Die Erfindung betrifft also in ihrem ersten Aspekt eine Sicherheitswerkbank, welche vom Grundaufbau wie eine herkömmliche Sicherheitswerkbank und insbesondere wie in EP 1 609 541 A2 beschriebene ausgebildet sein kann. So weist sie einen von einem Gehäuse umgebenen Arbeitsraum auf, in den während des Betriebs der Werkbank durch eine auf der Gehäusefrontseite befindliche und mit einer verstellbaren Frontscheibe veränderbare Arbeitsöffnung ein Lufteintrittsstrom einströmt. Die erfindungsgemäße Sicherheitswerkbank weist zudem ein Abluftgebläse und ein Umluftgebläse auf, die einen Luftstrom in der Sicherheitswerkbank fördern. Der vom Abluftgebläse angesaugte Teilluftstrom des Gesamtluftstroms wird durch einen Abluftfilter geleitet und als Abluftstrom aus der Sicherheitswerkbank geblasen, während der vom Umluftgebläse angesaugte Teilluftstrom des Gesamtluftstroms durch einen Umluftfilter hindurch als nach unten gerichteter Umluftstrom in den Arbeitsraum geblasen wird. Weiter weist die Sicherheitswerkbank eine Regelvorrichtung und einen Differenzdrucksensor sowie zwei mit diesem verbundene Druckaufnehmer, die zur Messung eines Drucks an zwei unterschiedlichen Positionen innerhalb der Sicherheitswerkbank ausgebildet sind. Dabei ist ein erster der Druckaufnehmer in unmittelbarer Nähe der Lüfterschaufeln auf der Niederdruckseite des Umluftgebläses und ein zweiter der Druckaufnehmer in einem strömungsberuhigten Bereich auf der Niederdruckseite des Umluftgebläses angeordnet.

Der wesentliche Unterschied der erfindungsgemäßen Sicherheitswerkbank gegenüber der aus der EP 1 609 541 A2 bekannten Sicherheitswerkbank besteht demnach in der Messanordnung zur Bestimmung des Volumenstroms des Umluftgebläses. Erfindungsgemäß wird ein Differenzdrucksensor mit zwei an diesen angeschlossenen Druckaufnehmern verwendet, wobei ein erster der Druckaufnehmer in unmittelbarer Nähe der Lüfterschaufeln angeordnet ist, und zwar im Unterschied zur EP '541 auf der Niederdruckseite, also der Einströmseite, des Umluftgebläses. Gegenüber der bekannten Anordnung auf der Hochdruckseite des Gebläses hat die Anordnung des Druckaufnehmers in unmittelbarer Nähe der Lüfterschaufeln auf der Einströmseite den Vorteil, dass die Absenkung des dynamischen Druckes in der Messposition unmittelbar proportional zum durch das Umluftgebläse geförderten Volumenstrom ist. Einflüsse anderer Faktoren auf das Messergebnis können praktisch vollständig ausgeschlossen werden. Als Vergleichswert, gegen den die Druckdifferenz bestimmt wird, dient erfindungsgemäß der Druck, der von dem zweiten Druckaufnehmer in einem strömungsberuhigten Bereich auf der Niederdruckseite des Umluftgebläses gemessen wird. Beide Messpunkte für ersten und zweiten Druckaufnehmer befinden sich erfindungsgemäß also auf der Niederdruckseite des Umluftgebläses, während im Stand der Technik eine Druckdifferenz zwischen Niederdruck- und Hochdruckseite des Umluftgebläses bestimmt wurde. Der zweite Druckaufnehmer wird zweckmäßig in einem Bereich angeordnet, in dem möglichst keine turbulente Strömung vorhanden ist. Vorzugsweise handelt es sich um einen von der Einströmöffnung des Umluftgebläses entfernt gelegenen Bereich, zweckmäßig in einer wenig durchströmten und abgelegenen Gehäuseecke oder einem durch andere Bauteile von der Strömung der verschiedenen Gebläse abgeschirmten Bereich. In diesem Bereich sollte ein praktisch konstanter statischer Druck vorherrschen, der eine solide Basis zur Bestimmung der Druckdifferenzen im Hinblick auf den vom ersten Druckaufnehmer gemessenen Druck an den Lüfterflügeln des Umluftgebläses bietet.

Der erste Druckaufnehmer wird, wie erwähnt, in unmittelbarer Nähe zu den Lüfterflügeln des Umluftgebläses angeordnet. Erfindungsgemäß bedeutet dies, dass der erste Druckaufnehmer so nah wie möglich an den Lüfterflügeln angeordnet ist, also so nah, dass die Lüfterflügel ihn bei der Rotation gerade nicht berühren. Dies kann beim Einbau des ersten Druckaufnehmers durch manuelles Drehen der Lüfterflügel getestet werden. Ein geeigneter Abstand liegt beispielsweise bei maximal 5 mm, vorzugsweise bei höchstens 3 mm, von demjenigen Teil der Lüfterflügel, der dem Druckaufnehmer am nächsten kommt.

Die erfindungsgemäße Anordnung hat den Vorteil eines sehr einfachen Aufbaus, der jedoch für Störfaktoren, die mit einer Änderung des Volumenstroms tatsächlich nichts zu tun haben, praktisch nicht anfällig ist. Vielmehr ist die gemessene Druckdifferenz unmittelbar repräsentativ für den Volumenstrom, der vom Umluftgebläse gefördert wird. Dieser Zusammenhang existiert auch für den gesamten Bereich der Volumenströme, die beim praktischen Betrieb der Sicherheitswerkbank relevant sind. Daher lassen sich die erfindungsgemäß ermittelten Druckdifferenzwerte sehr gut für eine exakte Regelung des Volumenstroms des Umluftgebläses einsetzen, also beispielsweise für eine Regelung, bei welcher der Volumenstrom des Umluftgebläses innerhalb festgelegter Volumenstrom-Grenzwerte konstant gehalten wird.

Dabei liegen der Messung der Differenzdrücke folgende an sich bekannte Bedingungen innerhalb der Sicherheitswerkbank zu Grunde: Bei herkömmlichen Sicherheitswerkbänken ist der mit der verschiebbaren Scheibe verschließbare Arbeitsraum üblicherweise räumlich getrennt von dem Bereich, in welchem Abluft- und Umluftgebläse angeordnet sind (nachfolgend als Lüfterraum bezeichnet). Der Lüfterraum befindet sich üblicherweise oberhalb des Arbeitsraums und steht mit letzterem über verschiedene Strömungsdurchlässe in Strömungsverbindung. Während des Betriebs herrscht im Arbeitsraum aufgrund der relativ großen Arbeitsöffnung praktisch Umgebungsdruck vor. Abluft- und Umluftgebläse saugen Luft aus dem Arbeitsraum an, welche üblicherweise durch einen Strömungskanal an der von der Arbeitsöffnung abgelegenen Rückseite des Arbeitsraumes in den Lüfterraum strömt. Dabei wird die Luft beschleunigt, und der Druck sinkt unter den Umgebungsdruck ab (bei mikrobiologischen Sicherheitswerkbänken typischerweise um ca. 35 Pa). Im Einströmbereich der Gebläse im Lüfterraum wird die Luft nochmals stark beschleunigt und die statische Druckenergie dabei in Geschwindigkeit umgewandelt. Der dynamische Druck errechnet sich als 0,5 * Dichte * Luftgeschwindigkeit². Die höchsten Geschwindigkeiten und niedrigsten statischen Drücke herrschen dabei unmittelbar vor den Schaufeln der Laufräder der Gebläse. Wie groß die weitere Druckabsenkung in diesem Bereich ist, hängt von dem Aufbau der jeweiligen Sicherheitswerkbank, beispielsweise deren Größe, Art und Positionierung der Gebläse usw., ab und liegt in der Regel zwischen 30 und 90 Pa. Beim Durchströmen des Gebläses wird dem Luftstrom durch die Motorleistung Energie zugeführt, was zu einem Anstieg des statischen Druckes im Bereich des Gebläses und im an das Gebläse anschließenden Bereich führt. Bei Verwendung neuer Filter und einer Durchflussgeschwindigkeit von ca. 0,3 m/s ergibt sich typischerweise ein Druckanstieg von über 90 Pa gegenüber dem Umgebungsdruck.

Wie bereits erwähnt, erfolgt erfindungsgemäß die Druckmessung mittels des ersten Druckaufnehmers unmittelbar an den Lüfterflügeln des Umluftgebläses in einem Bereich, in dem die höchste Strömungsgeschwindigkeit und der niedrigste statische Druck vorherrschen. Dieser Bereich ist daher zur Ermittlung von Druckdifferenzen gut geeignet, da hier bei den an sich niedrigen Drücken im zweistelligen Pascalbereich besonders hohe Differenzen gegenüber den Vergleichswerten des zweiten Druckaufnehmers erreicht werden können. Dies erhöht die Genauigkeit der Ergebnisse. Außerdem kann der Druckaufnehmer so positioniert werden, dass die lokale Druckänderung in einem möglichst breiten Bereich mit der Volumenstromänderung korreliert. Dies ist wichtig, da die Druckabsenkung im Luftstrom proportional zum Quadrat der Strömungsgeschwindigkeit ist, die Geschwindigkeitsverteilung über die Querschnittsfläche der Einström- oder Ausströmöffnung des Gebläses jedoch nicht gleichmäßig ist. Gegenüber der Anordnung eines Drucksensors im Anschluss an die Ausströmungsöffnung des Umluftgebläses liefert die erfindungsgemäße Messanordnung auch von daher verbesserte Ergebnisse.

Zu beachten ist bei der Anordnung des Druckaufnehmers in unmittelbarer Nähe zu den Lüfterflügeln des Umluftgebläses jedoch, dass die rotierenden Lüfterschaufeln periodische Druckänderungen erzeugen, die von dem Druckaufnehmer gemessen werden und deren Amplitude mit zunehmender Annäherung an die Lüfterflügel zunimmt. Diese Schwankungen können sich negativ auf die Regelgüte auswirken und sollten daher eliminiert werden, sodass sie bei der Regelung keine Berücksichtigung finden. Die sehr schnellen Schwankungen durch den Wechsel von Lüfterschaufel-Zwischenraum-Lüfterschaufel-Zwischenraum usw. können auf verschiedene geeignete Weise eliminiert oder zumindest abgeschwächt werden, sodass in die Regelung der Gebläseleistung des Umluftgebläses nur noch ein gemitteltes Differenzdruck-Messergebnis eingeht. Eine Möglichkeit besteht in geeigneten strömungsmechanischen Maßnahmen, die dazu führen, dass die durch die Schaufelrotation hervorgerufenen Druckoszillationen nicht unmittelbar auf den Druckabnehmer einwirken. Eine weitere Maßnahme besteht darin, die Oszillationen der Messergebnisse mittels eines elektronischen Filters abzuschwächen oder zu eliminieren. Weiterhin möglich ist eine rein rechnerische Ausmittelung der Ergebnisschwankungen. Auf diese Weise wird ein von den kurzzeitigen Schwankungen aufgrund der Rotation der Lüfterschaufeln unabhängiger Druckwert im Bereich des Einlasses des Umluftgebläses erhalten. Mit diesem Druckwert und dem zur gleichen Zeit vom zweiten Druckaufnehmer in einem strömungsberuhigten Bereich auf der Niederdruckseite des Umluftgebläses ermittelten Vergleichs-Druckwert wird dann ein Differenzdruckwert ermittelt, aus dem dann, ausgehend von einer Einströmöffnung mit konstantem Querschnitt, der vom Umluftgebläse zu dieser Zeit geförderte Volumenstrom ermittelt werden kann. Dieser errechnete Volumenstrom kann dann mit einem in der Regelvorrichtung hinterlegten Soll-Volumenstrom verglichen werden. Wird eine Abweichung vom Sollwert festgestellt, erfolgt eine Anpassung der Gebläseleistung, sodass wieder der gewünschte Soll-Volumenstrom gefördert wird. Alternativ kann auch direkt der gemessene Differenzdruckwert mit einem hinterlegten Soll-Differenzdruck, welcher repräsentativ für einen gewünschten Soll-Volumenstrom ist, verglichen und die Regelung entsprechend durchgeführt werden, damit wieder der Soll-Volumenstrom gefördert wird.

Auf die beschriebene Art und Weise ist mittels einer einfachen und kostengünstigen Differenzdruckmessung eine von Störeinflüssen weitgehend freie und genaue Regelung des Betriebs des Umluftgebläses der Sicherheitswerkbank möglich. Insbesondere kann die Regelung so erfolgen, dass ein im Wesentlichen konstanter Volumenstrom durch das Umluftgebläse gefördert wird. Die Regelung kann dabei generell so erfolgen, wie dies in der EP 1 609 541 A2 bereits grundsätzlich beschrieben wurde, wobei lediglich zur Regelung des Umluftgebläses die erfindungsgemäß ermittelten Differenzdruckwerte eingesetzt werden.

Als Differenzdrucksensoren können grundsätzlich alle aus dem Stand der Technik bekannten und geeigneten Sensoren dieser Art verwendet werden. Diese können unmittelbar an den gewünschten Messstationen platziert werden. Da aus Platzgründen eine Anbringung der Sensoren selbst am Messeort oft jedoch nur schlecht möglich ist oder diese das Strömungsverhalten negativ beeinflussen können, ist es bevorzugt, die Differenzdrucksensoren selbst nicht unmittelbar am Ort der Druckmessung anzubringen, sondern dort lediglich die Druckaufnehmer zu platzieren und diese mit dem Differenzdrucksensor zu verbinden. Derartige Differenzdrucksensoren sind aus dem Stand der Technik bekannt. Sie umfassen den eigentlichen Sensor sowie Druckaufnehmer, von denen mindestens einer mittels einer druckübertagenden Verbindung, in der Regel über einen Schlauch oder ein Röhrchen, mit einer Drucköffnung im Sensor verbunden ist. Dieser Typ Druckdifferenzsensoren wird im Rahmen der Erfindung bevorzugt eingesetzt. Besonders vorteilhaft sind dabei Sensoren, in denen mindestens ein Druckaufnehmer mittels eines flexiblen Kunststoffschlauches mit dem Sensor verbunden ist, da diese Sensoren sich besonders leicht installieren lassen. An dem vom Sensor abgelegenen Ende des Schlauches kann dabei ein Messröhrchen, beispielsweise aus einem formstabilen Kunststoff, angebracht sein, was die Montierbarkeit und Stabilität der Sensoranordnung verbessert. Von Vorteil umfasst daher der erste Druckaufnehmer ein insbesondere über einen Kunststoffschlauch mit dem Differenzdrucksensor verbundenes Druckaufnehmer-Röhrchen, dessen offenes Ende in unmittelbarer Nähe der Lüfterschaufeln des Umluftgebläses angeordnet ist. Zweckmäßig ist das Röhrchen dabei in Strömungsrichtung ausgerichtet, wobei die Fläche der Einlassöffnung senkrecht zur Strömungsrichtung verläuft, um die Strömung möglichst wenig zu stören.

Auch der zweite Druckaufnehmer weist zweckmäßig entweder ein insbesondere über einen Kunststoffschlauch mit dem Differenzdrucksensor verbundenes Röhrchen auf, dessen offenes Ende in einem strömungsberuhigten Bereich auf der Niederdruckseite des Umluftgebläses angeordnet ist. Für die Art der Anordnung gilt das gleiche wie für den ersten Druckaufnehmer. In einer alternativen und wegen des verringerten Montageaufwands bevorzugten Variante der Erfindung ist der Differenzdrucksensor jedoch in einem strömungsberuhigten Bereich auf der Niederdruckseite des Umluftgebläses angeordnet. In diesem Fall kann der Vergleichs-Druckwert direkt mit dem Differenzdrucksensor aufgenommen werden, sodass eine (Schlauch)verbindung zum zweiten Druckaufnehmer entfallen kann. Vielmehr ist der zweite Druckaufnehmer dann bevorzugt eine Drucköffnung im Differenzdrucksensor selbst.

Zusätzlich zu dem ersten Differenzdrucksensor ist in einer bevorzugten Ausführungsform ein zweiter Differenzdrucksensor vorgesehen, der wie der erste Sensor mit einem Druckaufnehmer in unmittelbarer Nähe der Lüfterschaufeln auf der Niederdruckseite des Umluftgebläses und einem weiteren Druckaufnehmer in einem strömungsberuhigten Bereich auf der Niederdruckseite des Umluftgebläses verbunden ist. Es bietet sich daher an, Teile von erstem und zweitem Differenzdrucksensor zur Vereinfachung gemeinsam zu verwenden, und zwar insbesondere den nahe der Lüfterschaufeln angeordneten Druckaufnehmer. Konkret verwenden also erster und zweiter Differenzdrucksensor denselben ersten Druckaufnehmer, der entsprechend mit beiden Drucksensoren verbunden ist. Besonders vorteilhaft ist es dabei, die Verbindung, beispielsweise in Form eines Kunststoffschlauches, zum Druckaufnehmer über einen möglichst langen Abschnitt als gemeinsame Verbindung zu beiden Drucksensoren zu verwenden und erst in der Nähe der Drucksensoren eine Gabelung vorzusehen, mit welcher die Verbindung (der Kunststoffschlauch) in zwei separate Zuleitungen aufgeteilt wird, die mit erstem und zweitem Differenzdrucksensor verbunden sind. In gleicher Weise könnte auch ein gemeinsamer zweiter Druckaufnehmer für beide Differenzdrucksensoren zur Bestimmung des Vergleichs-Druckwertes an beide Sensoren angeschlossen sein. Wie bereits vorstehend beschrieben, ist es jedoch auch in diesem Fall bevorzugt, die Differenzdrucksensoren selbst in einem strömungsberuhigten Bereich auf der Niederdruckseite des Umluftgebläses anzuordnen und die Druckmessungen unmittelbar über eine Drucköffnung des Sensors vorzunehmen.

Der Zweck des zusätzlichen Differenzdrucksensors besteht in der Kontrolle der Alarmgrenzen des Umluftgebläses. Unter Alarmgrenzen werden die zum Beispiel in der EN 12469 definierten entsprechenden gesetzlichen Vorgaben zu den Strömungsgeschwindigkeiten der Lufteintrittsströmung (durch die Arbeitsöffnung in die Sicherheitswerkbank hinein) und der Verdrängungsströmung (Fallströmung, "Downflow" von oben nach unten im Arbeitsraum) verstanden. Derzeit sind Mindestgeschwindigkeiten von 0,25 m/s für die Verdrängungsströmung und 0,4 m/s für die Lufteintrittsströmung festgelegt. Der Schnittpunkt der in einem Prüfdiagramm aufgetragenen mittleren Lufteintrittsströmung gegen die mittlere Verdrängungsströmung wird als Betriebspunkt der Sicherheitswerkbank bezeichnet. Am Betriebspunkt sind die Geschwindigkeiten von Verdrängungs- und Lufteintrittsströmung optimal. Bei Inbetriebnahme einer Sicherheitswerkbank sind Abluft- und Umluftgebläse so einzustellen, dass die Strömungsgeschwindigkeiten möglichst genau dem Betriebspunkt entsprechen. Die Betriebsparameter des jeweiligen Gebläses, bei denen die Vorgaben noch sicher eingehalten werden, stellen die Alarmgrenzen für das jeweilige Gebläse dar. Eine Abweichung von diesen Alarmgrenzen, sodass die vorgegebenen Mindestbedingungen nicht mehr sicher eingehalten werden, führt zur Ausgabe eines Alarmsignals. Der zweite Differenzdrucksensor dient also dazu, den ordnungsgemäßen Betrieb des Umluftgebläses entsprechend den Vorgaben zu kontrollieren. In gleicher Weise wie beim ersten Differenzdrucksensor wird aus den gemessenen Differenzdruck-Werten bestimmt, ob die Förderleistung des Gebläses ausreicht, um die vorgeschriebenen Strömungsgeschwindigkeiten einzuhalten. Allerdings überprüft die Regelvorrichtung die Differenzdruck-Messwerte - anders als im Fall des ersten Differenzdrucksensors - nur daraufhin, ob ein Überschreiten der Alarmgrenzen erfolgt ist, um in diesem Fall die Ausgabe eines Alarms zu veranlassen.

Zu dem gleichen Zweck ist bevorzugt auch ein dritter Differenzdrucksensor vorgesehen, der mit einem Druckaufnehmer im Bereich der Einströmöffnung des Abluftgebläses und einem weiteren Druckaufnehmer in einem strömungsberuhigten Bereich auf der Niederdruckseite des Abluftgebläses verbunden ist. Der dritte Differenzdrucksensor ist vorzugsweise wie die ersten beiden Sensoren im strömungsberuhigten Bereich angeordnet, sodass die Vergleichs-Druckwerte an einer Drucköffnung des Sensors selbst gemessen werden können. Alternativ ist eine Verwendung von zwei beispielsweise mittels Schläuchen verbundenen Druckaufnehmern jedoch ebenfalls möglich. Der dritte Differenzdrucksensor dient zweckmäßig zur Kontrolle der Alarmgrenzen des Abluftgebläses. Dabei wird grundsätzlich in gleicher Weise wie beim Umluftgebläse vorgegangen.

Grundsätzlich könnte der dritte Differenzdrucksensor auch zur Ermittlung von Differenzdruck-Werten zur Regelung des Abluftgebläses dienen. In diesem Fall wäre zweckmäßig ein vierter Differenzdrucksensor zur Kontrolle der Alarmgrenzen des Abluftgebläses vorhanden. Wie bereits eingangs erwähnt, ist - abhängig von der Art des Abluftgebläses - in vielen Fällen eine einfachere Regelung anhand der Stromaufnahme des Gebläses möglich, sodass auf die kompliziertere Regelung mittels Differenzdruck-Messwerten verzichtet werden kann. Im Rahmen der Erfindung ist letztere jedoch ebenfalls möglich.

Im Hinblick auf den Betrieb der Sicherheitswerkbank betrifft die vorliegende Erfindung in einem weiteren Aspekt ein Verfahren zum Betreiben einer Sicherheitswerkbank, wie sie vorstehend beschrieben wurde, welches die Schritte umfasst:
a) Bestimmen einer Druckdifferenz zwischen erstem Druckaufnehmer und zweitem Druckaufnehmer mittels des Differenzdrucksensors,
b1) Vergleichen der in a) bestimmten Druckdifferenz mit einer in der Regelvorrichtung hinterlegten Soll-Druckdifferenz, die einem Soll-Volumenstrom entspricht, oder
b2) Umrechnen der in a) gemessenen Druckdifferenz in einen zugehörigen Volumenstrom und Vergleichen des berechneten Volumenstrom-Werts mit einem in der Regelvorrichtung hinterlegten Volumenstrom-Sollwert, und
c) Regeln des Umluftgebläses derart, dass der Soll-Volumenstrom gefördert wird.

Wie bereits erwähnt, handelt es sich bei dem Soll-Volumenstrom des Umluftgebläses um denjenigen Volumenstrom, der vom Hersteller der Sicherheitswerkbank entsprechend den gesetzlichen Vorgaben für einen oder mehrere Betriebspunkte der Sicherheitswerkbank festgelegt wird. Es ist also möglich, lediglich für einen einzigen Betriebspunkt einen Soll-Volumenstrom festzulegen, oder aber für verschiedene Betriebspunkte jeweils einen eigenen Soll-Volumenstrom. Letzterer Fall ermöglicht es beispielsweise dem Benutzer, zwischen verschiedenen Umluftstrom-Stufen zu wählen. Je nach gewählter Stufe regelt dann die Regelvorrichtung das Umluftstromgebläse so, dass der der gewählten Stufe entsprechende Umluftstrom-Sollwert eingehalten wird. Die Erfindung soll nachfolgend am Beispiel einer Sicherheitswerkbank mit lediglich einem Betriebspunkt und einem Soll-Volumenstrom für das Umluftgebläse beschrieben werden. Für eine Sicherheitswerkbank mit mehreren Betriebspunkten kann für jeden einzelnen Betriebspunkt entsprechend vorgegangen werden.

Der ermittelte Sollwert für den Volumenstrom des Umluftgebläses wird in an sich bekannter Weise in der Regelvorrichtung der Sicherheitswerkbank abgespeichert. Der Sollwert kann dabei unmittelbar als Volumenstrom-Wert, also gefördertes Volumen pro Zeiteinheit, abgespeichert werden oder alternativ als Strömungsgeschwindigkeit, Druckdifferenzwert oder beliebiger anderer Wert, der den Soll-Volumenstrom eindeutig definiert. Ebenso kann in Schritt b2) die gemessene Druckdifferenz nicht nur in Volumen pro Zeiteinheit, sondern in jeden anderen für den Volumenstrom repräsentativen Wert - wie zum Beispiel die Strömungsgeschwindigkeit - umgerechnet und mit einem entsprechenden hinterlegten Sollwert verglichen werden. Durch die Regelung der Förderleistung des Umluftgebläses auf einen bestimmten Umluftstrom-Sollwert ist es möglich, den in den Innenraum der Sicherheitswerkbank nach unten strömenden Umluftstrom gleichbleibend bei einem geeigneten Wert für den Produktschutz zu halten. So können auch im Umluftsystem auftretende Luftwiderstandsänderungen, die zum Beispiel aus der Beladung des Umluftfilters herrühren, durch eine Erhöhung der Förderleistung des Umluftgebläses ausgeglichen werden. Hierzu übermittelt die Regelvorrichtung beispielsweise, wenn eine Abweichung des gemessenen Umluftstroms vom Volumenstrom-Sollwert festegestellt wird, einen Steuerimpuls, mit dem die Drehzahl des Umluftgebläses heraufgesetzt wird, bis der gemessene Wert wieder mit dem gespeicherten Wert übereinstimmt.

Selbstverständlich ist im Rahmen der Erfindung mit der Einhaltung eines vorgegebenen Sollwerts nicht gemeint, dass dieser Wert ständig exakt eingehalten wird. Wie bei allen Regelvorgängen beruht auch die Regelung der Förderleistungen der Gebläse der Sicherheitswerkbank darauf, dass in bestimmten zeitlichen Abständen eine fortwährende Nachjustierung erfolgt, wenn Abweichungen vom Soll festgestellt werden. Außerdem kann von vorneherein eine gewisse Abweichungsmarge zugelassen sein, innerhalb derer der Betrieb noch als zulässig erkannt wird und noch keine Nachregelung erfolgen muss. Der Sollwert muss demnach nicht ein punktueller Wert sein, sondern es kann sich auch um einen definierten Sollwerte-Bereich handeln. Gewisse definierte Abweichungen und Schwankungen der Förderleistungen der Gebläse sind also auch in der erfindungsgemäßen Sicherheitswerkbank möglich. Die Einstellung der Regelvorrichtung sollte jedoch so erfolgen, dass die zulässigen Abweichungen möglichst gering sind und den sicheren Betrieb der Werkbank nicht beeinträchtigen.

Es ist zu betonen, dass es sich insbesondere bei großen Werkbänken bei dem Umluft- bzw. Abluftgebläse auch jeweils um eine Mehrzahl von Einzelgebläsen handeln kann, die gemeinsam wie ein einzelnes Gebläse von der Regelvorrichtung angesteuert werden. In einer vorteilhaften Weiterbildung der Sicherheitswerkbank sind sowohl das Abluftgebläse als auch das Umluftgebläse stufenlos regelbare Gleichstromgebläse. Diese besonders gut regelbaren Gleichstromantriebe der Gebläse erlauben es, selbst bei einer langsamen Beladung der Hochleistungsfilter die jeweiligen Luftströme gleichmäßig und fein nachzuregeln und so im Wesentlichen konstant zu halten.

Festzuhalten ist weiterhin, dass die Konstanthaltung des Umluftstroms lediglich innerhalb der definierten Alarmgrenzen erforderlich ist. Es ist somit kein über den gesamten Messbereich präzise einzuhaltender Zusammenhang zwischen dem gemessenen Differenzdruck und dem Volumenstrom notwendig, sondern es reicht aus, wenn dieser Zusammenhang innerhalb der Alarmgrenzen um den voreingestellten, aber grundsätzlich beliebig wählbaren Betriebspunkt oder die Betriebspunkte herum existiert. Die Konstanthaltung (gegebenenfalls innerhalb der definierten Toleranzen) des Soll-Umluftvolumenstroms muss also lediglich innerhalb der definierten Alarmgrenzen erfolgen, ist allerdings mit der erfindungsgemäßen Regelung bis an die Alarmgrenzen (oberer und unterer Grenzwert) heran auch zuverlässig möglich. Für den Anwender hat dies den Vorteil, dass ein Alarm erst dann ausgelöst wird, wenn ein festgelegter Grenzwert der Druckdifferenz (oder des Volumenstroms oder der Strömungsgeschwindigkeit) über- oder unterschritten wird. Bis dahin gleicht die Regelung automatisch Änderungen der Druckverhältnisse aus und hält die im Betriebspunkt vom Umluftgebläse geförderte Luftmenge konstant. Die Beschränkung der Konstantregelung auf den Betriebspunkt der Sicherheitswerkbank verringert zudem den Aufwand und die Kosten bei der Auslegung und Abstimmung der Gebläse, Einströmdüsen und Druckmessvorrichtungen erheblich.

Es wurde bereits erwähnt, dass die Konstantregelung des Umluftstroms zweckmäßig in dem von den Alarmgrenzen definierten Bereich ausgeführt wird. Mittels des erfindungsgemäßen Regelungsverfahrens kann das Umluftgebläse über einen langen Zeitraum so nach geregelt werden, dass ein Volumenstrom im definierten Sollwert-Bereich aufrechterhalten bleibt. Allerdings tritt aufgrund zunehmender Verstopfung des Umluftfilters oder aus ähnlichen Gründen irgendwann der Zeitpunkt ein, an dem trotz Nachregelung des Gebläses der gewünschte Sollwert für den Volumenstrom nicht mehr erreicht werden kann. Zu diesem Zeitpunkt wird, wie grundsätzlich aus dem Stand der Technik bekannt, zweckmäßig ein Alarm ausgegeben, um den Benutzer zu warnen, dass ein sicherer Betrieb der Sicherheitswerkbank nicht mehr gewährleistet ist. Entsprechend ist das erfindungsgemäße Verfahren in einer bevorzugten Verfahrensvariante so ausgestaltet, dass in der Regelvorrichtung ein oberer und ein unterer Grenzwert für eine Soll-Druckdifferenz und/oder einen Soll-Volumenstrom abgespeichert sind und die Regelvorrichtung die Ausgabe eines Alarms veranlasst, wenn der obere Grenzwert überschritten oder der untere Grenzwert unterschritten wird. Die Grenzwerte für den Soll-Volumenstrom umfassen in diesem Fall und grundsätzlich im Rahmen der Erfindung nicht nur die Angabe des Strömungsvolumens pro Zeit, sondern auch die Angabe der Strömungsgeschwindigkeit, die wegen des feststehenden Einströmquerschnitts in das Gebläse repräsentativ für den geförderten Volumenstrom ist. Wie bereits in Zusammenhang mit dem Aufbau der Sicherheitswerkbank beschrieben, wird eine Abweichung von den Grenzwerten bevorzugt mittels eines zweiten Differenzdrucksensors festgestellt, der zusätzlich zum ersten Druckdifferenzsensor, welcher die Größe des geförderten Volumenstroms über die Messung der Druckdifferenz zur Regelung des Umluftgebläses bestimmt, vorhanden ist.

In der EP 1 609 541 A2 wurden bereits die Vorteile der voneinander unabhängigen Regelung von Umluft- und Abluftgebläse ausführlich beschrieben. Um diese Vorteile im Rahmen der Erfindung ebenfalls zu erhalten, wird bevorzugt zur Regelung des Umluftgebläses ebenfalls eine unabhängige Regelung des Abluftgebläses ausgeführt. Die Regelung des Abluftgebläses muss jedoch, wie bereits erwähnt, nicht über eine Druckdifferenzmessung erfolgen. Die Festlegung des Abluftstrom-Sollwerts, in der Regel unter Berücksichtigung der Umgebungsbedingungen der Sicherheitswerkbank, und die Regelung des Abluftgebläses können grundsätzlich wie bereits in der EP '541 beschrieben durchgeführt werden. Außerdem werden in üblicher Weise Alarmgrenzen als oberer und ein unterer Grenzwert für den Betrieb des Abluftgebläses festgelegt und in der Regelvorrichtung abgespeichert. Wie schon im Fall des Umluftgebläses können diese Grenzwerte als Druckdifferenz-Werte oder Volumenstrom-Werte (Volumen pro Zeit oder Strömungsgeschwindigkeit) festgelegt sein. Zur Überprüfung, ob diese Grenzwerte während des Betriebs der Sicherheitswerkbank eingehalten werden oder nicht, ist bevorzugt ein dritter Differenzdrucksensor vorgesehen, der grundsätzlich wie die bereits beschriebenen Differenzdrucksensoren arbeitet. Die vom dritten Differenzdrucksensor ermittelten Messwerte werden an die Regelvorrichtung übermittelt, welche bewertet, ob der obere Grenzwert überschritten oder der untere Grenzwert unterschritten wird. Ist dies der Fall, veranlasst die Regelvorrichtung die Ausgabe eines Alarms, beispielsweise in Form eines optischen und/oder akustischen Signals.

Die erfindungsgemäße Sicherheitswerkbank sorgt auf diese Weise nicht nur für eine von äußeren Einflüssen weitgehend unabhängige zuverlässige Einhaltung von Personen- und Produktschutz, sondern erleichtert bereits das Einstellen der Grundbetriebsparameter. Da das Umluft- und das Abluftgebläse voneinander unabhängig und in Abhängigkeit der den Abluft- bzw. den Umluftfilter tatsächlich verlassenden Luftströme geregelt werden, bleibt die Lufteintrittsgeschwindigkeit des einströmenden Lufteintrittsstroms auch beim Einstellen der Umluftströmung im Wesentlichen konstant. Ein aufwendiges Nachstellen des Abluftvolumenstroms nach Justage des Produktschutzes entfällt.

Wird die erfindungsgemäße Sicherheitswerkbank an ein externes Abluftsystem angeschlossen, ist sie wegen der Regelung des den Filter verlassenden Abluftstroms auf sich im Abluftsystem ändernde Strömungswiderstände stets optimal eingestellt. Genauer gesagt, werden diese Luftwiderstandsänderungen automatisch von der Regelvorrichtung so ausgeglichen, dass stets ein im Wesentlichen gleichbleibender Abluftvolumenstrom die Sicherheitswerkbank verlässt. Derartige Änderungen der Strömungswiderstände bei einem Abluftsystem ergeben sich zum Beispiel dann, wenn mehrere Sicherheitswerkbänke an einem Abluftkanal gemeinsam betrieben werden und einzelne Sicherheitswerkbänke zu- oder abgeschaltet werden. Solche Schwankungen führen bei Verwendung erfindungsgemäßer Werkbänke zu keiner Verschlechterung des Personen- oder Produktschutzes der einzelnen Sicherheitswerkbank, da diese ihre Abluftströmung selbständig nachjustiert. Bei Betrieb mehrerer erfindungsgemäßer Sicherheitswerkbänke an einem gemeinsamen Abluftsystem kann man jede einzelne Sicherheitswerkbank, wenn sie nicht mehr betrieben werden soll, abschalten, ohne dabei die Luftströmungssysteme der weiterhin im Betrieb gehaltenen Sicherheitswerkbänke nennenswert zu beeinflussen. Auch aus anderen Gründen auftretende Druckschwankungen innerhalb des Abluftsystems werden von der erfindungsgemäßen Sicherheitswerkbank ohne Nachteile für Personen- und Produktschutz aufgefangen.

Zur weiteren Verbesserung der Betriebssicherheit kann zusätzlich ein Strömungssensor für die Messung der durch die Arbeitsöffnung einströmenden Außenluft vorgesehen sein. Vorteilhafterweise weist die Sicherheitswerkbank auch eine Messeinrichtung zur Messung der Position der Frontscheibe auf. Um einen sicheren Betrieb zu ermöglichen, darf die Frontscheibe nicht über längere Zeit zu weit geöffnet bleiben, da sich bei einem zu großen Öffnungsquerschnitt der Arbeitsöffnung die benötigten Luftströmungen nicht aufrecht erhalten lassen und so Personen- und Produktschutz nicht gesichert werden können. Die Messeinrichtung kann zum Beispiel unmittelbar an der Unterkante der Frontscheibe angeordnete elektrische Kontakte aufweisen, die die Position der Frontscheibenkante in ihren Führungsmitteln darstellen. Verwendbar sind aber auch andere geeignete Messeinrichtungen. Derartige Messvorrichtungen sind im Stand der Technik grundsätzlich bekannt und müssen hier nicht näher erläutert werden. Zweckmäßig sind für die genannten Messparameter in der Regelvorrichtung Wertebereiche hinterlegt, die angeben, innerhalb welchen Rahmens die Sicherheitswerkbank sicher und zuverlässig oder den gesetzlichen oder sonstigen Vorschriften entsprechend betrieben werden kann. Diese Sicherheitsgrenzbereiche werden bevorzugt zusätzlich zu den für die Gebläseregelung benötigten Messparametern überwacht, um eine besonders hohe Betriebssicherheit der Sicherheitswerkbank zu erreichen. Die zusätzliche Überwachung der Abluftströmungsgeschwindigkeit, Umluftströmungsgeschwindigkeit und Lufteintrittgeschwindigkeit innerhalb vorbestimmter Grenzen stellt sicher, dass die Sicherheitswerkbank nicht unbemerkt in nicht einwandfreiem Zustand betrieben wird. Gleiches gilt für die Überwachung der Position der Frontscheibe. Stellt das diese Parameter überwachende Sicherheitssystem der Sicherheitswerkbank eine Abweichung von der vorgegebenen Position fest, wird zweckmäßig ein akustischer und/oder optischer Alarm ausgegeben.

Bevorzugt umfasst die Sicherheitswerkbank zudem wenigstens eine Messvorrichtung, die den Stromverbrauch und/oder die Drehzahl des Abluftgebläses, des Umluftgebläses oder beider Gebläse ermittelt. Diese Messergebnisse werden in vorgegebenen Zeitintervallen an die Regelvorrichtung weitergegeben und dort ausgewertet. Zu diesem Zweck können in einer Speichereinheit der Regelvorrichtung Wertebereiche gespeichert sein, die angeben, innerhalb welcher Grenzen der Stromverbrauch oder die Drehzahl des jeweiligen Gebläses liegen soll. Dann ist die Regelvorrichtung beispielsweise so programmiert, dass die Gebläse nur innerhalb der für sie gespeicherten Betriebsbereiche betrieben werden. So kann verhindert werden, dass die Gebläse beispielsweise durch zu große Stromzufuhr oder zu hohe Drehzahl beschädigt werden. Ist ein Betrieb unter den vorgegebenen Bedingungen nicht möglich, kann das Sicherheitssystem der Werkbank einen akustischen und/oder optischen Alarm auslösen. Zusätzlich kann, wie in allen anderen Alarmfällen auch, die Ursache für den ausgegebenen Alarm auf einem Display oder in sonstiger geeigneter Weise angezeigt werden. Ursache für einen "Gebläsealarm" kann beispielsweise sein, dass aufgrund eines stark beladenen Filters die Leistung des Gebläses so hoch sein müsste, um das gewünschte Fördervolumen zu gewährleisten, dass dies mit der maximal zulässigen Drehzahl oder dem maximal zulässigen Stromverbrauch nicht mehr möglich ist.

Zweckmäßig weist das Sicherheitsüberwachungssystem der Sicherheitswerkbank zusätzlich Einrichtungen zur Überwachung der Funktionsfähigkeit wesentlicher Bauteile der Sicherheitswerkbank auf. Zusätzlich zur Einhaltung vorgegebener Betriebsparameter wird also überwacht, ob bestimmte Bauteile der Sicherheitswerkbank überhaupt betriebsbereit sind. Bevorzugt wird wenigstens eines der Bauteile der Differenzdrucksensoren, Strömungssensoren, Abluftgebläse, Umluftgebläse, Regelvorrichtung und Stromversorgung der Sicherheitswerkbank von dem Sicherheitsüberwachungssystem überwacht. Um einen sicheren Betrieb der Werkbank zu gewährleisten, werden zweckmäßig mehrere oder alle dieser Bauteile regelmäßig auf ihre ungestörte Betriebsfähigkeit hin überwacht. Wird ein Ausfall oder ein Defekt auch nur eines der überwachten Bauteile bemerkt, wird ein optischer und/oder akustischer Alarm ausgegeben. Von Vorteil ist vor allem die Überwachung der Regelungsvorrichtung durch ein unabhängiges Sicherheitsüberwachungssystem, da so sichergestellt wird, dass die vom Regelungssystem geregelten Luftgeschwindigkeiten in den jeweiligen Bereichen der Sicherheitswerkbank den Vorgaben entsprechen und ein ausreichender Personenschutz garantiert ist.

Die Erfindung wird nachfolgend anhand einer Zeichnung näher erläutert. Die darin enthaltenen Figuren dienen lediglich der Erläuterung bevorzugter Ausführungsbeispiele der Erfindung, ohne dass die Erfindung auf diese Beispiele beschränkt wäre. Gleiche Bezugszeichen bezeichnen gleiche Teile, wobei nicht immer sämtliche Teile einer Figur mit einem Bezugszeichen versehen sein müssen. In den Figuren zeigen schematisch:
- Fig. 1: ein Ausführungsbeispiel einer erfindungsgemäßen Sicherheitswerkbank;
- Fig. 2: eine Seitenansicht der in Fig.1 gezeigten erfindungsgemäßen Sicherheitswerkbank in deren Inneres,
- Fig. 3: ein Schaltbild zur Erläuterung des erfindungsgemäßen Verfahrens zum Betrieb einer erfindungsgemäßen gezeigten Sicherheitswerkbank,
- Fig. 4: ein erstes Ausführungsbeispiel der Anordnung der Differenzdrucksensoren,
- Fig. 5: ein zu Fig. 4 alternatives Ausführungsbeispiel und
- Fig. 6: ein Beispiel der Anordnung eines Druckaufnehmers in Bezug auf einen Lüfterflügel.

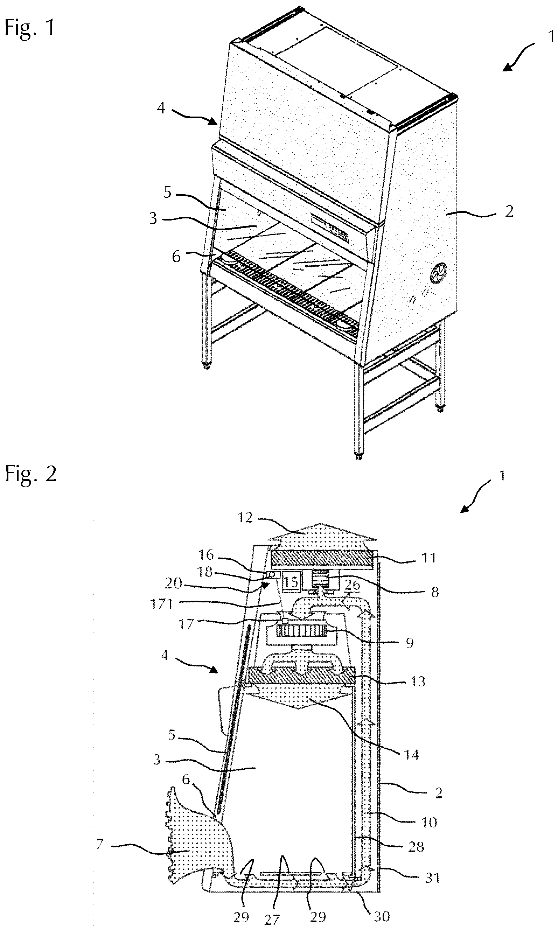

Fig. 1 und Fig. 2 zeigen eine erfindungsgemäße Sicherheitswerkbank 1, die beispielsweise zur Bearbeitung mikrobiologischer Kulturen eingesetzt werden kann. In ihrem Grundaufbau entspricht die Sicherheitswerkbank 1 dem, was aus dem Stand der Technik bekannt ist. Die Sicherheitswerkbank 1 weist ein Gehäuse 2 auf, welches einen Arbeitsinnenraum 3 umgibt. An der Gehäusefrontseite 4 ist eine verstellbare Frontscheibe 5 angeordnet. Die Frontscheibe 5 ist so gelagert, dass sie im Wesentlichen parallel zur Gehäusefrontseite 4 hoch und herunter verschoben werden kann. Durch Herunterschieben der Frontscheibe 5 kann die auf der Gehäusefrontseite befindliche Arbeitsöffnung 6 verkleinert werden. Die Höhe der Arbeitsöffnung 6 ergibt sich also aus dem Spalt zwischen der Unterseite der Frontscheibe 5 und der Arbeitsraum-Bodenplatte 27 des Gehäuses 2.

Das Gehäuse 2 ist üblicherweise zweischalig aufgebaut, so dass das Gehäuse selbst zumindest teilweise als Lüftungskanal für die in der Sicherheitswerkbank zirkulierenden Luftströme dient. Die Arbeitsraum-Bodenplatte 27 weist im Bereich der Arbeitsöffnung 6 sowie nahe der Arbeitsraum-Rückwand 28 angeordnete Ansaugöffnungen 29 auf. Unterhalb der Arbeitsraum-Bodenplatte 27 verläuft eine außenliegende Bodenplatte 30. In dem von diesen beiden Platten 27, 30 eingeschlossenen Zwischenraum bzw. Lüftungskanal strömt ein Luftstrom 10 von der Frontseite 4 in Richtung auf die Gehäuserückwand. Im weiteren Strömungsverlauf wird der Luftstrom 10 durch den Zwischenraum zwischen Arbeitsraum-Rückwand 28 und äußerer Rückwand 31 nach oben geführt. Oberhalb des Arbeitsinnenraums 3 befinden sich in einem Lüfterraum 26 das Abluftgebläse 8 und das Umluftgebläse 9, die jeweils Teilluftströme des Luftstroms 10 ansaugen. Die Dicke der Strömungspfeile 10 in Fig. 2 verdeutlicht stark schematisiert die unterschiedlichen Volumina der jeweiligen Luftströme.

Der vom Umluftgebläse 9 angesaugte und durch den Umluftfilter 13 geführte Umluftstrom 14 wird nach unten gerichtet in den Arbeitsinnenraum 3 geblasen. Der Umluftfilter 13 ist beispielsweise ein herkömmlicher HEPA-Filter, der Verunreinigungen wie Mikroorganismen aus der Umluft herausfiltert und so verhindert, dass mit dem Umluftstrom 14 Verunreinigungen in den Arbeitsinnenraum 3 zurückgetragen werden. Die von oben nach unten strömende Umluft bildet einen im Wesentlichen senkrechten Vorhang vor der Arbeitsöffnung 6 und zwischen im Arbeitsinnenraum 3 angeordneten Proben und trägt so zum Produktschutz bei.

Der Abluftstrom 12 wird durch das Abluftgebläse 8 über einen Abluftfilter 11 der Umgebung der Sicherheitswerkbank 1 oder einem hier nicht näher dargestellten gebäudeeigenen Abluftsystem zugeführt. Bei dem Abluftfilter 11 kann es sich erneut um einen herkömmlichen Filter wie einen HEPA-Filter handeln. Er verhindert, dass Mikroorganismen oder sonstige Verunreinigungen mit der Abluft aus der Sicherheitswerkbank 1 herausgetragen werden. Die aus der Sicherheitswerkbank 1 herausgeführte Abluft 12 wird durch einen durch die Arbeitsöffnung 6 in den Arbeitsinnenraum 3 hereinströmenden Lufteintrittsstrom 7 ersetzt. Dieser Lufteintrittsstrom sorgt für den Personenschutz und verhindert, wenn er ausreichend eingestellt ist, dass Verunreinigungen durch die Arbeitsöffnung 6 aus der Sicherheitswerkbank 1 herausgelangen.

Die Aufrechterhaltung eines ausreichenden Lufteintrittsstroms 7 sowie Umluftstroms 14 wird durch entsprechende Regelung der Luftströme bewirkt. Hierfür ist in der Sicherheitswerkbank 1 eine Regelvorrichtung 15 vorhanden. In der Regelvorrichtung 15 wurden vor Inbetriebnahme der Sicherheitswerkbank 1 Sollwerte hinterlegt, die angeben, welches Abluftvolumen pro Zeiteinheit vom Abluftgebläse 8 und welches Umluftvolumen vom Umluftgebläse 9 gefördert werden soll. Die Sollwerte können als Volumen-pro-Zeit-Werte, Strömungsgeschwindigkeiten oder Druckdifferenzwerte hinterlegt sein. Die Regelvorrichtung 15 regelt die Stromversorgung des Abluftgebläses 8 und des Umluftgebläses unabhängig voneinander nun so, dass ein Abluftvolumenstrom und ein Umluftvolumenstrom gefördert werden, deren Größe dem jeweiligen Sollwert, gegebenenfalls im Rahmen festgelegter Toleranzen, entspricht.

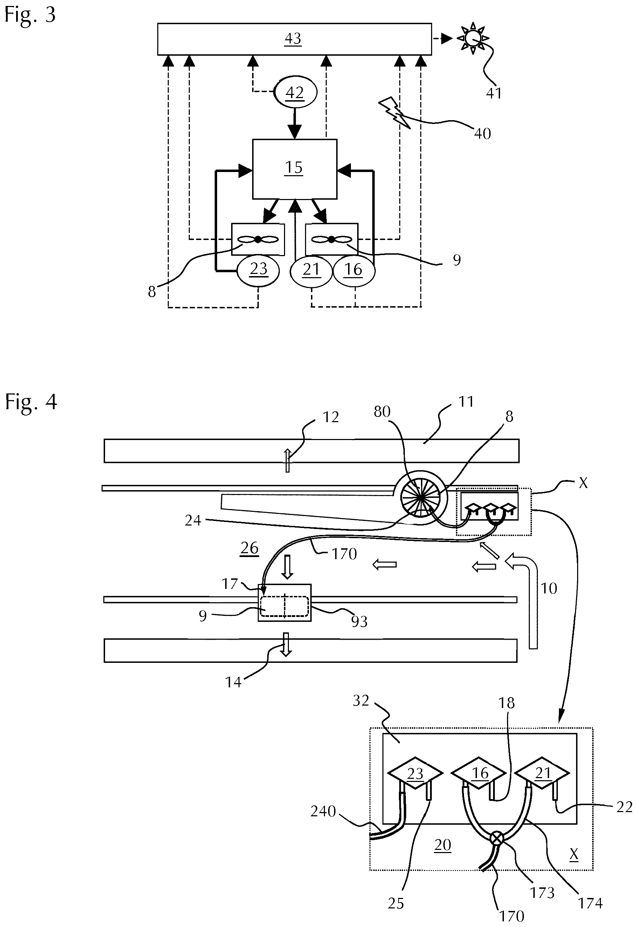

Um den tatsächlich vom Umluftgebläse geförderten Volumenstrom feststellen und diesen Wert mit dem hinterlegten Sollwert vergleichen zu können, ist in der Sicherheitswerkbank ein Differenzdrucksensor 16 angeordnet. Dieser ermittelt in vorgegebenen Zeitabständen den geförderten Volumenstrom über eine Druckdifferenzmessung und sendet die Messwerte an die Regelvorrichtung 15. Diese vergleicht Messwert und Sollwert. Ist der Messwert kleiner als der gewünschte Wert, erhöht die Regelvorrichtung 15 die Förderleistung des Umluftgebläses 9 so lange, bis der dem gewünschten Volumenstrom entsprechende Wert am Differenzdrucksensor 16 festgestellt wird. Umgekehrt wird die Drehzahl des Gebläses 9 reduziert, wenn der Volumenfluss zu hoch ist. Der Regelungskreislauf ist schematisch in Fig. 3 dargestellt.

Erfindungsgemäß weist der Differenzdrucksensor 16 zwei mit diesem verbundene Druckaufnehmer 17, 18 auf, mit denen der Druck an zwei unterschiedlichen Positionen innerhalb der Sicherheitswerkbank gemessen werden kann. Dabei ist der erste Druckaufnehmer 17 in unmittelbarer Nähe der Lüfterschaufeln des Umluftgebläses 9 auf dessen Niederdruckseite 91 angeordnet. Der zweite Druckaufnehmer 18 befindet sich ebenfalls auf der Einlassseite (Niederdruckseite 91) des Umluftgebläses 9, jedoch in einem strömungsberuhigten Bereich 20. Die zwischen beiden Druckaufnehmern 17 und 18 gemessene Druckdifferenz ist unmittelbar proportional zu dem durch das Umluftgebläse 9 geförderten Volumenstrom. Daher kann die gemessene Druckdifferenz direkt als Messwert für den Vergleich in der Regelvorrichtung 15 eingesetzt werden, wo er mit einem Druckdifferenz-Sollwert verglichen wird, welcher der Druckdifferenz entspricht, die bei Förderung des Soll-Volumenstroms auftritt. Alternativ kann die Druckdifferenz jedoch auch in den zugehörigen Volumenstrom (Volumen pro Zeit) oder die entsprechende Strömungsgeschwindigkeit, welche wegen des gleich bleibenden Eintrittsquerschnitts des Umluftgebläses 9 ebenfalls direkt proportional zum geförderten Volumenstrom ist, umgerechnet und mit einem entsprechenden Soll-Volumenstrom oder einer Soll-Strömungsgeschwindigkeit in der Regelvorrichtung 15 verglichen werden.

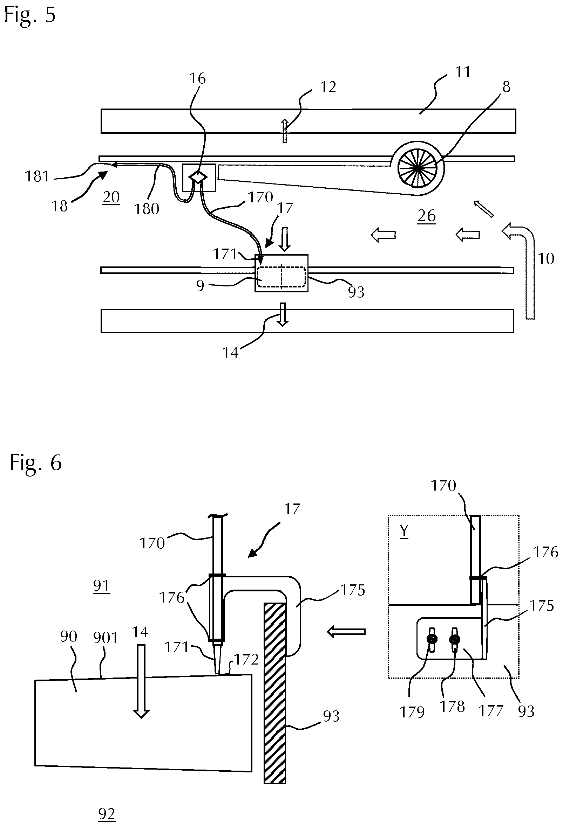

Figur 4 zeigt eine erste mögliche Anordnung des Differenzdrucksensors 16 mit den zugehörigen Druckaufnehmern 17 und 18. Der erste Druckaufnehmer 17 befindet sich unmittelbar oberhalb der Lüfterflügel des in einem Gehäuse 93 angeordneten Umluftgebläses 9. Wie sich der vergrößerten Darstellung in Figur 6 entnehmen lässt, weist der Druckaufnehmer 17 ein Röhrchen 171 aus Kunststoff auf, das mit einem Ende in einen Kunststoffschlauch 170 eingeschoben ist, der wiederum mit einer Drucköffnung des Differenzdrucksensors 16 verbunden ist (siehe Ausschnittvergrößerung X in Figur 4). Das offene Ende 172 des Röhrchens 171 befindet sich praktisch unmittelbar oberhalb der Oberkante 901 einer der Lüfterschaufeln 90 des Umluftgebläses 9. Der Abstand ist gerade ausreichend, sodass das Röhrchen 171 die Lüfterschaufeln nicht berührt, wenn das Umluftgebläse 9 in Betrieb genommen wird. Dies kann bei der Montage des Druckaufnehmers 17 am Gehäuse 93 des Umluftgebläses durch manuelles Drehen des Lüfterrades getestet werden. Bevorzugt beträgt der Abstand zwischen Röhrchen 171 und Oberkante 901 maximal 5 mm, insbesondere höchstens 3 mm.

Zur Befestigung des Druckaufnehmers 17 in der gezeigten Position dient ein Halter 175, dessen eines Ende eine parallel zum Außenrand des Gehäuses 93 verlaufende Halteplatte 177 aufweist, in welcher zwei Langlöcher 178 vorhanden sind, die eine Ausrichtung des Halters 175 in geeigneter Position ermöglichen, in welcher der Halter mittels Schrauben 179 am Gehäuse 93 fixiert wird. Die Position wird dabei, abgesehen von der richtigen Höhe, so gewählt, dass Röhrchen 171 und das mit diesem verbundene Ende des Schlauches 170 im Wesentlichen in der Strömungsrichtung des Umluftstroms 14 ausgerichtet sind. Auf diese Weise verursacht der Druckaufnehmer 17 die geringste Störung des Umluftstromes. Zur Befestigung des Schlauchendes sowie des Röhrchens 171 weist der Halter 175 zwei übereinander angeordnete umgebogene Haltelaschen 176 mit Löchern auf, durch die der Schlauch 170 hindurch geschoben werden kann. Die Befestigung erfolgt beispielsweise mittels Kabelbindern, mit denen auch das Röhrchen 171 im Schlauch 170 sicher fixiert werden kann.

Im in Figur 4 gezeigten Fall ist der Differenzdrucksensor 16 auf einer Sensorplatine 32 befestigt, welche wiederum mit der Regelvorrichtung 15 verbunden ist. Die Sensorplatine 32 ist in einem strömungsberuhigten Bereich 20 des Lüfterraumes 26 angeordnet, wobei die Platine selbst die auf ihr angeordneten Sensoren gegen die von den Gebläsen 8 und 9 verursachte Strömung abschirmt. Da sich der Differenzdrucksensor 16 in einem strömungsberuhigten Bereich 20 auf der Einströmseite 91 des Umluftgebläses befindet, ist es nicht erforderlich, den zweiten Druckaufnehmer 18 mittels eines Kunststoffschlauches in einen strömungsberuhigten Bereich zu führen. Vielmehr kann die zweite Drucköffnung des Differenzdrucksensors 16 unmittelbar als zweiter Druckaufnehmer 18 dienen. Dies verringert den Montageaufwand.

Alternativ ist es jedoch ebenfalls möglich, sowohl den ersten Druckaufnehmer 17 als auch den zweiten Druckaufnehmer 18 in Form von Röhrchen auszugestalten, die mittels Schlauchverbindungen mit den Drucköffnungen des Differenzdrucksensors 16 verbunden sind. Diese Möglichkeit ist in Figur 5 dargestellt. Die Ausbildung des ersten Druckaufnehmers 17 entspricht demjenigen, was im Zusammenhang mit Figur 4 beschrieben wurde. Der zweite Druckaufnehmer 18 besteht hier ebenfalls aus einem Kunststoffschlauch 180, in dessen vom Differenzdrucksensor 16 abgelegenes Ende ein Kunststoffröhrchen 181 eingesetzt ist. Dieses Kunststoffröhrchen mündet in einen strömungsberuhigten Bereich 20 am Seitenrand des Lüfterraums 26.

In Figur 4 ist zusätzlich zum ersten Differenzdrucksensor 16 ein weiterer Differenzdrucksensor 21 auf der Sensorplatine 32 angeordnet. Dessen erster Druckaufnehmer misst ebenfalls den Druck in unmittelbarer Nähe des Umluftgebläses 9. Zur Verringerung des Montageaufwands wird für diese Druckmessung ebenfalls der erste Druckaufnehmer 17 des Differenzdrucksensors 16 verwendet. Die gemeinsame Verwendung des Kunststoff-Röhrchens 171 sowie eines großen Teils des Kunststoffschlauches 170 gelingt durch Anbringung einer Gabelung 173 in der Nähe der Differenzdrucksensoren 16 und 21. Die Gabelung, beispielsweise ein Y-Rohrstück aus Kunststoff, teilt den Kunststoffschlauch 170 in zwei Schlauchabschnitte auf, von denen das Schlauchstück 174 von der Gabelung 173 bis zu einer der Drucköffnungen des Differenzdrucksensors 21 führt. Die Messung des Vergleichsdrucks im strömungsberuhigten Bereich 20 erfolgt unmittelbar über die zweite Drucköffnung 22. Der zweite Differenzdrucksensor 21 misst also grundsätzlich die gleichen Druckdifferenzen wie der erste Differenzdrucksensor 16. Jedoch dienen die von ihm gemessenen Druckdifferenzwerte nicht zur Regelung des Umluftgebläses 9, sondern zur Kontrolle von dessen Alarmgrenzen. Die gemessenen Druckdifferenzen werden in der Regelvorrichtung 15 also mit einem oberen und einem unteren Grenzwert verglichen, die den zulässigen Arbeitsbereich des Umluftgebläses 9 definieren. Übermittelt der Differenzdrucksensor 21 einen Druckdifferenzwert, der einem Volumenstrom entspricht, der außerhalb des von den Grenzwerten definierten Arbeitsbereichs des Umluftgebläses liegt, wertet die Regelvorrichtung 15 dies als Fehler und veranlasst in an sich bekannter Weise, dass ein Alarm ausgegeben wird. Dies ist schematisch ebenfalls in Figur 3 dargestellt, wo der Fehler des Umluftgebläses 9 durch das Pfeilsymbol 40 angedeutet ist. Im gezeigten Fall ist der Regelvorrichtung 15 noch eine Sicherheitseinrichtung 43 nachgeschaltet, welche die Ausgabe des Alarmsignals 41, hier in Form eines optischen Signals, veranlasst.

In der erfindungsgemäßen Sicherheitswerkbank wird zweckmäßig nicht nur die Förderleistung des Umluftgebläses, sondern auch diejenige des Abluftgebläses 8 geregelt. Hierfür kann, wie für das Umluftgebläse, ein Differenzdrucksensor entsprechend dem Differenzdrucksensor 16 eingesetzt werden. Einfacher und daher bevorzugt ist es jedoch, das Abluftgebläse in an sich bekannter Weise in Abhängigkeit von dessen Leistungsaufnahme zu regeln. Der in Figur 4 dargestellte dritte Differenzdrucksensor 23 dient daher nicht der Regelung des Abluftgebläses 8, sondern - wie der Differenzdrucksensor 21 - zur Überwachung von dessen Alarmgrenzen. Der Druckaufnehmer 24, der auf der Eintrittsseite des Abluftgebläses 8 im Bereich von dessen Einströmöffnung 80 angeordnet und über einen Kunststoffschlauch 240 mit einer ersten Drucköffnung des Differenzdrucksensors 23 verbunden ist, ist grundsätzlich wie der Druckaufnehmer 17 aufgebaut. Als zweiter Druckaufnehmer 25 dient die zweite Drucköffnung des Differenzdrucksensors 23. Die Überwachung der Alarmgrenzen und die Ausgabe eines Alarmssignals erfolgen analog zum für das Umluftgebläse 9 Beschriebenen.

Um eine Einhaltung der hinterlegten Volumenstrom-Sollwerte erreichen zu können, wird bevorzugt zusätzlich die Fensterposition in der Sicherheitswerkbank 1 überwacht. Eine zu große Arbeitsöffnung 6 würde die Einhaltung der Sollwerte erschweren, wenn nicht unmöglich machen. Aus diesem Grund ist im Bereich der Arbeitsöffnung 6 eine Messeinrichtung 42 (nur in Fig. 3 gezeigt) vorhanden, die die aktuelle Fensterposition ermittelt und den Messwert an die Sicherheitseinrichtung 43 sendet. Die Sicherheitseinrichtung 43 kann räumlich in die Regelvorrichtung 15 integriert sein. Weicht die Fensterposition von der für den Sicherheitsbetrieb erlaubten Position ab, veranlasst die Sicherheitsvorrichtung 43 die Alarmvorrichtung 41, ein akustisches und/oder optisches Signal abzugeben, das den Benutzer veranlassen soll, die Frontscheibe 5 abzusenken.

Zusätzlich zur Frontscheibe überwacht das Sicherheitsüberwachungssystem 43 zweckmäßig die Regelvorrichtung 15 sowie die Differenzdrucksensoren 16, 21 und 23, die Lüfter 8, 9 und die Messeinrichtung 42. In Fig. 3 sind die zum Sicherheitssystem 43 gehörenden Rückmeldungen als gestrichelte Pfeile dargestellt. Funktioniert eine der Komponenten nicht ordnungsgemäß, veranlasst die Sicherheitsvorrichtung 43 ebenfalls die Ausgabe eines Alarmsignals durch die Alarmvorrichtung 41.

## Patentansprüche

1. Sicherheitswerkbank (1) mit einem von einem Gehäuse (2) umgebenen Arbeitsraum (3) mit einer in der Gehäusefrontseite (4) befindlichen und mit einer verstellbaren Frontscheibe (5) einstellbaren Arbeitsöffnung (6) zum Einlassen eines in den Arbeitsraum (3) einströmenden Lufteintrittsstroms (7), einem Abluftgebläse (8) und einem Umluftgebläse (9) zum Fördern eines Luftstroms (10) in der Sicherheitswerkbank (1), die so ausgebildet sind, dass ein vom Abluftgebläse (8) angesaugter Teilluftstrom durch einen Abluftfilter (11) als Abluftstrom (12) aus der Sicherheitswerkbank (1) und ein vom Umluftgebläse (9) angesaugter Teilluftstrom durch einen Umluftfilter (13) als nach unten gerichteter Umluftstrom (14) in den Arbeitsraum (3) geblasen wird, sowie einer Regelvorrichtung (15), einem Differenzdrucksensor (16) sowie zwei mit diesem verbundenen Druckaufnehmern (17, 18), die zur Messung eines Drucks an zwei unterschiedlichen Positionen innerhalb der Sicherheitswerkbank ausgebildet sind,
**dadurch gekennzeichnet,**
**dass** ein erster der Druckaufnehmer (17) in unmittelbarer Nähe der Lüfterschaufeln (90) auf der Niederdruckseite (91) des Umluftgebläses (9) und ein zweiter der Druckaufnehmer (18) in einem strömungsberuhigten Bereich (20) auf der Niederdruckseite (91) des Umluftgebläses (9) angeordnet ist.

2. Sicherheitswerkbank nach Anspruch 1,
**dadurch gekennzeichnet,**
**dass** der erste Druckaufnehmer (17) ein insbesondere über einen Kunststoffschlauch (170) mit dem Differenzdrucksensor (16) verbundenes Röhrchen (171) umfasst, dessen offenes Ende (172) in unmittelbarer Nähe der Lüfterschaufeln (90) des Umluftgebläses (9) angeordnet ist.

3. Sicherheitswerkbank nach Anspruch 1 oder 2,
**dadurch gekennzeichnet,**
**dass** der zweite Druckaufnehmer (18) entweder ein insbesondere über einen Kunststoffschlauch (180) mit dem Differenzdrucksensor (16) verbundenes Röhrchen (181) umfasst, dessen offenes Ende in einem strömungsberuhigten Bereich (20) auf der Niederdruckseite (91) des Umluftgebläses (9) angeordnet ist, oder der Differenzdrucksensor (16) in einem strömungsberuhigten Bereich (20) auf der Niederdruckseite (91) des Umluftgebläses (9) angeordnet und der zweite Druckaufnehmer (18) eine Drucköffnung im Druckaufnehmer (16) ist.

4. Sicherheitswerkbank nach einem der Ansprüche 1 bis 3,
**dadurch gekennzeichnet,**
**dass** ein zweiter Differenzdrucksensor (21) vorgesehen ist, der mit einem Druckaufnehmer (17) in unmittelbarer Nähe der Lüfterschaufeln (90) auf der Niederdruckseite (91) des Umluftgebläses (9) und einem weiteren Druckaufnehmer (22) in einem strömungsberuhigten Bereich (20) auf der Niederdruckseite (91) des Umluftgebläses (9) verbunden ist.

5. Sicherheitswerkbank nach Anspruch 4,
**dadurch gekennzeichnet,**
**dass** der in der Nähe der Lüfterschaufeln (90) angeordnete Druckaufnehmer (17) der erste Druckaufnehmer (17) des Differenzdrucksensors (16) nach einem der Ansprüche 1 bis 3 ist und die Verbindung, insbesondere in Form eines Kunststoffschlauches (170), zwischen Druckaufnehmer (17) und Differenzdrucksensor (16) eine Gabelung (173) aufweist, von der eine Verbindung, insbesondere in Form eines weiteren Kunststoffschlauches (174), zum zweiten Differenzdrucksensor (21) verläuft.

6. Sicherheitswerkbank nach einem der Ansprüche 1 bis 5,
**dadurch gekennzeichnet,**
**dass** ein dritter Differenzdrucksensor (23) vorgesehen ist, der mit einem Druckaufnehmer (24) im Bereich der Einströmöffnung (80) des Abluftgebläses (8) und einem weiteren Druckaufnehmer (25) in einem strömungsberuhigten Bereich (20) auf der Niederdruckseite (91) des Abluftgebläses (9) verbunden ist.

7. Sicherheitswerkbank nach einem der Ansprüche 1 bis 6,
**dadurch gekennzeichnet,**
**dass** Abluftgebläse (8) und Umluftgebläse (9) in einem vom Arbeitsraum (3) räumlich getrennten Lüfterraum (26) angeordnet sind.

8. Verfahren zum Betreiben einer Sicherheitswerkbank nach einem der vorhergehenden Ansprüche, umfassend die Schritte:
a) Bestimmen einer Druckdifferenz zwischen erstem Druckaufnehmer (17) und zweitem Druckaufnehmer (18) mittels des Differenzdrucksensors (16),
b1) Vergleichen der in a) bestimmten Druckdifferenz mit einer in der Regelvorrichtung (15) hinterlegten Soll-Druckdifferenz, die einem Soll-Volumenstrom entspricht, oder
b2) Umrechnen der in a) gemessenen Druckdifferenz in einen zugehörigen Volumenstrom und Vergleichen des berechneten Volumenstrom-Werts mit einem in der Regelvorrichtung (15) hinterlegten Volumenstrom-Sollwert, und
c) Regeln des Umluftgebläses (9) derart, dass der Soll-Volumenstrom gefördert wird.

9. Verfahren nach Anspruch 8,
worin in der Regelvorrichtung (15) ein oberer und ein unterer Grenzwert für eine Soll-Druckdifferenz und/oder einen Soll-Volumenstrom abgespeichert sind und die Regelvorrichtung (15) die Ausgabe eines Alarms veranlasst, wenn der obere Grenzwert überschritten oder der untere Grenzwert unterschritten wird.

10. Verfahren nach Anspruch 9,
worin die Regelung der Förderleistung des Umluftgebläses (9) im Bereich zwischen oberem und unterem Grenzwert erfolgt.

11. Verfahren nach Anspruch 9 oder 10,
worin die Abweichung von den Grenzwerten mittels des zweiten Differenzdrucksensors (21) festgestellt wird.

12. Verfahren nach einem der Ansprüche 8 bis 11,
worin in der Regelvorrichtung (15) ein oberer und ein unterer Grenzwert für die Soll-Druckdifferenz und/oder den Soll-Volumenstrom für das Abluftgebläse (8) hinterlegt sind und die Regelvorrichtung (15) die Ausgabe eines Alarms veranlasst, wenn die Messung mit dem dritten Differenzdrucksensor (23) ergibt, dass der obere Grenzwert überschritten oder der untere Grenzwert unterschritten wird.

## Claims

1. Safety workbench (1) having a work space (3) surrounded by a housing (2) having a work opening (6) located in the housing front side (4) and adjustable with an adjustable front panel (5) for admitting an air inlet flow (7) into the work space (3), an exhaust fan (8) and a circulating fan (9) for conveying an air flow (10) in the safety workbench (1), which are designed such that a partial air flow drawn in by the exhaust fan (8) is blown through an exhaust air filter (11) as an exhaust air flow (12) out of the safety workbench (1) and a partial air flow drawn in by the circulating fan (9) is blown through a circulating air filter (13) as a downwardly directed circulating air flow (14) into the work space (3), and a control device (15), a differential pressure sensor (16) and two pressure transducers (17, 18) connected thereto which are designed to measure a pressure at two different positions within the safety workbench,
**characterized in**
**that** a first of the pressure transducers (17) is arranged in the immediate vicinity of the fan blades (90) on the low-pressure side (91) of the circulating fan (9) and a second of the pressure transducers (18) is arranged in a low-flow area (20) on the low-pressure side (91) of the circulating fan (9).

2. Safety workbench according to claim 1, **characterized in that** the first pressure transducer (17) comprises a tube (171) connected to the differential pressure sensor (16) in particular via a plastics hose (170), the open end (172) of which tube is arranged in the immediate vicinity of the fan blades (90) of the circulation fan (9).

3. Safety workbench according to claim 1 or 2, **characterized in that** the second pressure transducer (18) either comprises a tube (181) connected to the differential pressure sensor (16) in particular via a plastics hose (180), the open end of which tube is arranged in a low-flow region (20) on the low-pressure side (91) of the circulation fan (9), or the differential pressure sensor (16) is arranged in a low-flow region (20) on the low-pressure side (91) of the circulation fan (9) and the second pressure transducer (18) is a pressure port in the pressure transducer (16).

4. Safety workbench according to any of claims 1 to 3, **characterized in that** a second differential pressure sensor (21) is provided which is connected to a pressure transducer (17) in the immediate vicinity of the fan blades (90) on the low-pressure side (91) of the circulation fan (9) and to a further pressure transducer (22) in a low-flow region (20) on the low-pressure side (91) of the circulation fan (9).

5. Safety workbench according to claim 4, **characterized in that** the pressure transducer (17) arranged in the vicinity of the fan blades (90) is the first pressure transducer (17) of the differential pressure sensor (16) according to any of claims 1 to 3, and the connection, in particular in the form of a plastics hose (170), between the pressure transducer (17) and the differential pressure sensor (16) has a bifurcation (173) from which a connection, in particular in the form of a further plastics hose (174), extends to the second differential pressure sensor (21).

6. Safety workbench according to any of claims 1 to 5, **characterized in that** a third differential pressure sensor (23) is provided that is connected to a pressure transducer (24) in the region of the inflow opening (80) of the exhaust fan (8) and to a further pressure transducer (25) in a low-flow region (20) on the low-pressure side (91) of the exhaust fan (9).

7. Safety workbench according to any of claims 1 to 6, **characterized in that** the exhaust fan (8) and the circulation fan (9) are arranged in a fan space (26) that is spatially separate from the work space (3).

8. Method for operating a safety workbench according to any of the preceding claims, comprising the steps of:
a) determining a pressure difference between the first pressure transducer (17) and the second pressure transducer (18) by means of the differential pressure sensor (16),
b1) comparing the pressure difference determined in a) with a target pressure difference which is stored in the control device (15) and corresponds to a target volume flow, or b2
) converting the pressure difference measured in a) into an associated volume flow and comparing the calculated volume flow value with a target volume flow value stored in the control device (15), and
c) controlling the circulation fan (9) such that the target volume flow is conveyed.

9. Method according to claim 8, wherein an upper and a lower limit value for a target pressure difference and/or a target volume flow are stored in the control device (15) and the control device (15) triggers the output of an alarm if the upper limit value is exceeded or the lower limit value is not met.

10. Method according to claim 9, wherein the control of the capacity of the circulation fan (9) takes place in the range between the upper and lower limit value.

11. Method according to either claim 9 or 10, wherein the deviation from the limit values is detected by means of the second differential pressure sensor (21).

12. Method according to any of claims 8 to 11, wherein an upper and a lower limit value for the target pressure difference and/or the target volume flow for the exhaust fan (8) are stored in the control device (15) and the control device (15) triggers the output of an alarm when the measurement with the third differential pressure sensor (23) shows that the upper limit value is exceeded or the lower limit value is not met.

## Revendications

1. Établi de sécurité (1) comportant un espace de travail (3) entouré par un boîtier (2), l'espace de travail comportant une ouverture de travail (6) située sur la face frontale de boîtier (4) et réglable au moyen d'une vitre frontale déplaçable (5), laquelle ouverture de travail permet l'admission d'un flux d'entrée d'air (7) affluant dans l'espace de travail (3), une soufflante d'échappement (8) et une soufflante de circulation (9) permettant de transporter un flux d'air (10) dans l'établi de sécurité (1), lesquelles sont conçues de telle sorte qu'un flux d'air partiel aspiré par la soufflante d'échappement (8) est soufflé hors de l'établi de sécurité (1) à travers un filtre d'échappement (11) en tant que flux d'échappement (12), et qu'un flux d'air partiel aspiré par la soufflante de circulation (9) est soufflé dans l'espace de travail (3) à travers un filtre de circulation (13) en tant que flux de circulation (14) orienté vers le bas, ainsi qu'un dispositif de réglage (15), un détecteur de pression différentielle (16) ainsi que deux capteurs de pression (17, 18) reliés à ce dernier, lesquels permettent de mesurer une pression à deux positions différentes à l'intérieur de l'établi de sécurité,
**caractérisé**
**en ce qu'**un premier capteur de pression (17) est disposé à proximité immédiate des pales de ventilation (90) du côté basse pression (91) de la soufflante de circulation (9) et en ce qu'un second capteur de pression (18) est disposé dans une zone à flux réduit (20) du côté basse pression (91) de la soufflante de circulation (9).

2. Établi de sécurité selon la revendication 1,
**caractérisé**
**en ce que** le premier capteur de pression (17) comprend un tube (171) relié au détecteur de pression différentielle (16) en particulier par l'intermédiaire d'un tuyau en plastique (170), l'extrémité ouverte (172) du tube étant disposée à proximité immédiate des pales de ventilation (90) de la soufflante de circulation (9).

3. Établi de sécurité selon la revendication 1 ou 2,
**caractérisé**
**en ce que** le second capteur de pression (18) comprend un tube (181) relié au détecteur de pression différentielle (16) en particulier par l'intermédiaire d'un tuyau en plastique (180), l'extrémité ouverte du tube étant disposée dans une zone à flux réduit (20) du côté basse pression (91) de la soufflante de circulation (9), ou le détecteur de pression différentielle (16) est disposé dans une zone à flux réduit (20) du côté basse pression (91) de la soufflante de circulation (9) et le second capteur de pression (18) est une ouverture de pression dans le détecteur de pression différentielle (16).

4. Établi de sécurité selon l'une des revendications 1 à 3,
**caractérisé**
**en ce qu'**un deuxième détecteur de pression différentielle (21) est prévu, lequel est relié à un capteur de pression (17) à proximité immédiate des pales de ventilation (90) du côté basse pression (91) de la soufflante de circulation (9) et à un autre capteur de pression (22) dans une zone à flux réduit (20) du côté basse pression (91) de la soufflante de circulation (9).

5. Établi de sécurité selon la revendication 4,
**caractérisé**
**en ce que** le capteur de pression (17) disposé à proximité des pales de ventilation (90) est le premier capteur de pression (17) du détecteur de pression différentielle (16) selon l'une des revendications 1 à 3 et que la liaison, en particulier sous la forme d'un tuyau en plastique (170), présente une fourche (173) entre le capteur de pression (17) et le détecteur de pression différentielle (16), à partir de laquelle une liaison, en particulier sous la forme d'un autre tuyau en plastique (174), s'étend jusqu'au deuxième détecteur de pression différentielle (21).

6. Établi de sécurité selon l'une des revendications 1 à 5,
**caractérisé**
**en ce qu'**un troisième détecteur de pression différentielle (23) est prévu, lequel est relié à un capteur de pression (24) dans la zone de l'ouverture d'affluence (80) de la soufflante d'échappement (8) et à un autre capteur de pression (25) dans une zone à flux réduit (20) du côté basse pression (91) de la soufflante d'échappement (9).

7. Établi de sécurité selon l'une des revendications 1 à 6,
**caractérisé**
**en ce que** la soufflante d'échappement (8) et la soufflante de circulation (9) sont disposées dans un espace de ventilation (26) séparé spatialement de l'espace de travail (3).

8. Procédé de fonctionnement d'un établi de sécurité selon l'une des revendications précédentes, comprenant les étapes :
a) de détermination d'une différence de pression entre le premier capteur de pression (17) et le second capteur de pression (18) au moyen du détecteur de pression différentielle (16),
b1) de comparaison de la différence de pression déterminée à l'étape a) avec une différence de pression théorique stockée dans le dispositif de réglage (15), laquelle différence de pression théorique correspond à un débit volumique théorique, ou b2)
de conversion de la différence de pression mesurée à l'étape a) en un débit volumique associé et de comparaison de la valeur de débit volumique calculée avec une valeur théorique de débit volumique stockée dans le dispositif de réglage (15), et
c) de réglage de la soufflante de circulation (9) de manière à transporter le débit volumique théorique.

9. Procédé selon la revendication 8,
dans lequel une valeur limite supérieure et une valeur limite inférieure pour une différence de pression théorique et/ou pour un débit volumique théorique sont enregistrées dans le dispositif de réglage (15), et le dispositif de réglage (15) provoque le déclenchement d'une alarme si la valeur limite supérieure est dépassée ou la valeur limite inférieure n'est pas atteinte.

10. Procédé selon la revendication 9,
dans lequel le réglage de la capacité de transport de la soufflante de circulation (9) est effectué dans la plage comprise entre la valeur limite supérieure et la valeur limite inférieure.

11. Procédé selon la revendication 9 ou 10,
dans lequel l'écart par rapport aux valeurs limites est établi au moyen du deuxième détecteur de pression différentielle (21).

12. Procédé selon l'une des revendications 8 à 11,
dans lequel une valeur limite supérieure et une valeur limite inférieure pour la différence de pression théorique et/ou pour le débit volumique théorique pour la soufflante d'échappement (8) sont stockées dans le dispositif de réglage (15), et le dispositif de réglage (15) provoque le déclenchement d'une alarme si la mesure au moyen du troisième détecteur de pression différentielle (23) montre que la valeur limite supérieure est dépassée ou que la valeur limite inférieure n'est pas atteinte.
